(19) Europäisches Patentamt
European Patent Office
Office européen des brevets

(11) **EP 4 401 190 A1**

(12) **EUROPEAN PATENT APPLICATION**

(43) Date of publication:
**17.07.2024 Bulletin 2024/29**

(21) Application number: **23208045.7**

(22) Date of filing: **06.11.2023**

(51) International Patent Classification (IPC):
*H01M 10/42* (2006.01)     *H01M 50/403* (2021.01)
*H01M 50/434* (2021.01)     *H01M 50/443* (2021.01)
*H01M 50/446* (2021.01)     *H01M 50/451* (2021.01)
*H01M 50/457* (2021.01)     *H01M 50/489* (2021.01)
*H01M 50/449* (2021.01)     *H01M 10/052* (2010.01)

(52) Cooperative Patent Classification (CPC):
**H01M 10/4235; H01M 50/403; H01M 50/434;
H01M 50/443; H01M 50/446; H01M 50/451;
H01M 50/457; H01M 50/489;** H01M 10/052;
H01M 50/449

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023  TW 112101053
18.07.2023  TW 112126740**

(71) Applicant: **BenQ Materials Corporation
Taoyuan City 33341 (TW)**

(72) Inventors:
- YEH, Wei-Ting
  **33341 Taoyuan City (TW)**
- LO, Wan-Ting
  **Taoyuan City (TW)**
- LO, Yi-Ting
  **33341 Taoyan (TW)**
- CHENG, Kai-Wei
  **33341 Taoyuan City (TW)**
- HUANG, Yi-Fang
  **33341 Taoyuan City (TW)**

(74) Representative: **Murgitroyd & Company
165-169 Scotland Street
Glasgow G5 8PL (GB)**

(54) **HIGH THERMAL-STABILITY SEPARATOR AND METHOD FOR MANUFACTURING THEREOF**

(57)     A high thermal-stability separator and method for manufacturing thereof are disclosed. The high thermal-stability separator comprises a porous film and a titanium oxide or/and titanium hydroxide film, wherein the porous film comprises a porous substrate and a inorganic layer, wherein the inorganic layer comprises a plurality of inorganic particles and a binder, the inorganic layer is formed on at least one surface of the porous substrate, and the porous substrate and the inorganic layer have a plurality of interconnected porous structures; and the titanium oxide or/and titanium hydroxide film is formed on the surface and the inner walls of porous structures of the porous film. The present high thermal-stability separator can provide enhanced compression retention and excellent high temperature melt integrity, and maintain a satisfied air permeability (Gurley) after compression.

EP 4 401 190 A1

**Description**

CROSS - REFERENCE TO RELATED APPLICATION

This application claims the benefit of Taiwanese patent application serial No.112101053, filed on Jan. 10, 2023, and the benefit of Taiwanese patent application serial No.112126740, filed on July. 18, 2023, the subject matters of which are incorporated herein by reference.

BACKGROUND OF THE INVENTION

**Field of Invention**

The invention relates to a high thermal-stability separator, and more particularly to a high thermal-stability separator comprising a titanium oxide film and/or a titanium hydroxide film and a method for manufacturing thereof.

**Description of Related Art**

During the application of lithium-ion batteries, the separator must satisfy the need of sufficient mechanical performance to bear various forces inside and outside the battery, especially compressive stress. In fact, the stacking pressure is applied to the battery during the lithium-ion battery assembly process to maintain close contact between all components, and the external load and collision during the daily use of the battery will also cause variance of the internal pressure. Most importantly, in each charge and discharge cycle of a lithium-ion battery, the embedding and de-embedding of lithium ions are not only electrochemical processes, but also lead to the volume expansion of the electrode material. The expanded electrodes inevitably squeeze the interior of the battery and lead to the compression of the separator and deformation of the micro-pores of the separator, which results in decreasing in the ionic conductivity along the thickness direction. Therefore, strengthening the compression resistance of the battery separator to maintain a certain degree of air permeability after compression is an important subject.

Furthermore, the melt integrity of the battery separator at high temperature is a key feature to ensure the safety of a lithium-ion battery. High temperature melt integrity of the battery separator can provide additional safety in case of heat accumulation inside the lithium-ion battery due to the rising temperature caused by external high temperature, overcharging, internal short circuit or any other abnormal electrochemical reaction because the separator can maintain its integrity at high temperatures. Therefore, the electrodes of the lithium-ion battery can be prevented from contacting with each other at high temperatures to avoid thermal runaway. Separators for lithium-ion batteries are usually made of polyolefin materials, namely polyethylene (PE) and/or polypropylene (PP), which have insufficient melt integrity at high temperatures. Consequently, a separator with a high temperature melt integrity is highly expected.

SUMMARY OF THE INVENTION

This present invention discloses a high thermal-stability separator which has an enhanced compression retention and an excellent high temperature melt integrity, and maintains a satisfied air permeability (Gurley) after compression.

One aspect of the present invention is to provide a high thermal-stability separator comprising a porous film which comprises a porous substrate and an inorganic layer, wherein the inorganic layer comprises a plurality of inorganic particles and a binder and formed on at least one surface of the porous substrate, and the porous substrate and the inorganic layer have a plurality of porous structures communicated with each other; and a titanium oxide film and/or a titanium hydroxide film deposited on the surface of the porous film and inner walls of the porous structures.

In an embodiment of the present invention, the high thermal-stability separator has a compression retention more than 90% and a decrease of air permeability (Gurley) of the high thermal-stability separator less than 35% after being compressed with a load of 88 Kgf/cm$^2$ for 30 seconds.

In an embodiment of the present invention, the high thermal-stability separator has a thermal rupture temperature more than 170°C.

In an embodiment of the present invention, the titanium oxide film and/or the titanium hydroxide film is/are deposited by chemical solution deposition by sequentially applying a precursor solution and a reactive solution on the porous film to make the reactive solution react with the precursor solution. The precursor solution is a 0.25wt% to 3wt% titanium alkoxide solution with a solvent of methanol, ethanol, isopropanol, or combinations thereof. The reactive solution is a 30wt% to 70wt% alcohol solution.

In an embodiment of the present invention, the titanium oxide and/or the titanium hydroxide film further comprises a tackifier, a stabilizer or a metal salt.

In an embodiment of the present invention, the tackifier is poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

In an embodiment of the present invention, the stabilizer is hexamethyldisilazane (HMDS).

In an embodiment of the present invention, the metal salt is sodium bromide, potassium iodide, magnesium chloride, strontium chloride, calcium chloride, strontium bromide, copper chloride, or combinations thereof.

In an embodiment of the present invention, the porous substrate is a single-layered or multi-layered polyolefin, polyester or polyamide porous substrate.

In an embodiment of the present invention, the inorganic layer comprises a plurality of inorganic particles and a binder to form a porous structure to communicate with the porous structure of the porous substrate. In an embodiment of the present invention, the inorganic layer comprises 80wt% to 99wt% inorganic particles and 1wt% to 20wt% binder. In a preferred embodiment of the present invention, the inorganic layer is formed on one or both surfaces of the porous substrate.

In an embodiment of the present invention, the inorganic particles are $Mg(OH)_2$, $BaSO_4$, $BaTiO_3$, $Pb(Zr,Ti)O_3$ (PZT), $Pb_{1-x}La_xZr_{1-y}(Zr,TiyO_3)$ (PLZT, wherein $0<x<1$ and $0<y<1$), $Pb(Mg_{1/3}Nb_{2/3})O_3$-$PbTiO_3$ (PMN-PT), $HfO_2$, $SrTiO_3$, $SnO_2$, $CeO_2$, MgO, NiO, CaO, ZnO, $ZrO_2$, $SiO_2$, $Y_2O_3$, $Al(OH)_3$, $Al_2O_3$, AlOOH, SiC, $TiO_2$, or combinations thereof.

In an embodiment of the present invention, the binder is ethylene-vinyl acetate copolymer (EVA), poly(meth)acrylate, cross-linked (meth)acrylic resin, fluororubber, styrene-butadiene rubber (SBR), polyvinyl alcohol (PVA), polyvinyl butyral (PVB), polyvinylpyrrolidone (PVP), poly-n-vinyl acetamide, polyvinylidene fluoride (PVDF), polyurethane, or combinations thereof.

Another aspect of the present invention is to provide a method for manufacturing a high thermal-stability separator, comprising the steps of providing a porous film comprising a porous substrate and an inorganic layer, wherein the inorganic layer comprises a plurality of inorganic particles and a binder and is formed on at least one surface of the porous substrate, and the porous substrate and the inorganic layer have a plurality of porous structures communicated with each other; and forming a titanium oxide film and/or a titanium hydroxide film on the surface of the porous film and inner walls of the porous structures.

In an embodiment of the present invention, the step of forming a titanium oxide film and/or a titanium hydroxide film on the surface and the inner walls of the porous structures of the porous film comprises the steps of preparing a first chemical deposition solution set comprising a first precursor solution with a 0.25wt% to 3wt% titanium alkoxide solution, and a first reactive solution of 30wt% to 70wt% alcohol solution; and sequentially applying the first precursor solution and the first reactive solution on the porous film to make the first reactive solution react with the first precursor solution to deposit a titanium oxide film and/or a titanium hydroxide film on the surface and the inner walls of the porous structures of the porous film.

In an embodiment of the present invention, the titanium alkoxide is titanium methoxide, titanium ethoxide, titanium isopropoxide, titanium tert-butoxide, or combinations thereof, and is preferably titanium isopropoxide, and the solvent of the titanium alkoxide solution is methanol, ethanol, isopropanol, or combinations thereof. In a preferred embodiment of the present invention, the first precursor solution is 0.25wt% to 2.5wt% titanium alkoxide solution.

In an embodiment of the present invention, the alcohol of the first reactive solution is methanol, ethanol, isopropanol, ethoxyethanol, allyl alcohol, ethylene glycol, or combinations thereof. In a preferred embodiment of the present invention, the first reactive solution is a 40wt% to 60wt% alcohol solution. In a preferred embodiment of the present invention, the first reactive solution is a solution of methanol, ethanol, isopropanol, or combinations thereof.

In an embodiment of the present invention, the first precursor solution further comprises a stabilizer with a using amount of 0.5wt% to 7wt%.

In an embodiment of the present invention, the first reactive solution further comprises a tackifier with a using amount of 0.05wt% to 5wt%.

In an embodiment of the present invention, the above-mentioned method further comprises the steps of: preparing a second chemical deposition solution set comprising a second precursor solution with a 0.25wt% to 3wt% titanium alkoxide solution and a second reactive solution with a 30wt% to 70wt% alcohol solution after the step of preparing the first chemical deposition solution set, and sequentially applying the second precursor solution and the second reactive solution on the porous film after step of sequentially applying the first precursor solution and the first reactive solution on the porous film.

In an embodiment of the present invention, the species and concentration of the titanium alkoxide solution of the second precursor solution can be same as or different from that of the first precursor solution. The titanium alkoxide of the second precursor solution is titanium methoxide, titanium ethoxide, titanium isopropoxide, titanium tert-butoxide, or combinations thereof, and the solvent of the second precursor solution is methanol, ethanol, isopropanol, or combinations thereof. In a preferred embodiment of the present invention, the second precursor solution is a 0.25wt% to 2.5wt% titanium alkoxide solution.

In an embodiment of the present invention, the species and concentration of the alcohol solution of the second reactive solution can be same as or different from that of the first reactive solution. The alcohol solution of the second reactive solution is methanol, ethanol, isopropanol, ethoxyethanol, allyl alcohol, ethylene glycol, or combination thereof. In a preferred embodiment of the present invention, the second reactive solution is a 40wt% to 60wt% alcohol solution. In a preferred embodiment of the present invention, the second reactive solution is a solution of methanol, ethanol, isopropanol, or combinations thereof.

In an embodiment of the present invention, the second precursor solution further comprises a stabilizer with a using amount of 0.5wt% to 7wt%.

In an embodiment of the present invention, the second reactive solution further comprises a tackifier with a using amount of 0.05wt% to 5wt%.

In an embodiment of the present invention, the second reactive solution further comprises a metal salt with a using amount of 5wt% to 20wt%.

Another aspect of the present invention is to provide a high thermal-stability separator, comprising a porous film with a plurality of porous structures; and a titanium oxide-silicon oxide film and/or a titanium hydroxide-silicon oxide film deposited on the surface of the porous film and inner walls of the porous structures.

Another aspect of the present invention is to provide a method for manufacturing a high thermal-stability separator comprising the steps of providing a porous film with a plurality of porous structures and a titanium oxide film and/or a titanium hydroxide film deposited on the surface of the inner walls of the porous structures of the porous film; preparing a third chemical deposition solution set comprising a 1wt% to 10wt% alkoxysilane solution, and a third reactive solution of 90wt% to 99.5wt% alcohol solution; and sequentially applying the alkoxysilane solution and the third reactive solution on the porous film to form a titanium oxide-silicon oxide film and/or a titanium hydroxide-silicon oxide film on the surface and the inner walls of the porous structures of the porous film.

In an embodiment of the present invention, the alkoxysilane solution is tetraethoxysilane (TEOS) with a solvent of methanol, ethanol, isopropanol or combinations thereof.

In an embodiment of the present invention, the alkoxysilane solution further comprises a catalyst, and preferably comprises ammonia as the catalyst. In a preferred embodiment of the present invention, the using amount of the catalyst is 5 to 15 parts by weight per 100 parts by weight of solvent.

In an embodiment of the present invention, the alcohol of the third reactive solution is methanol, ethanol, isopropanol, ethoxyethanol, allyl alcohol, ethylene glycol, or combination thereof.

The above and other aspects of the invention will become better understood with regard to the following detailed description of the preferred but non-limiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

## DETAILED DESCRIPTION OF THE INVENTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present invention may be practiced in case no such specific details.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The term "(meth)acrylate" used herein refers to acrylate or methacrylate.

The present invention is to provide a high thermal-stability separator, comprising a porous film which comprising a porous substrate and an inorganic layer, wherein the inorganic layer comprises a plurality of inorganic particles and a binder and is formed on at least one surface of the porous substrate, and the porous substrate and the inorganic layer have a plurality of porous structures communicated with each other; and a titanium oxide film and/or a titanium hydroxide film deposited on the surface and the inner walls of the porous structures of the porous film.

The compression retention of the present high thermal-stability separator a is more than 90% after being compressed with a load of 88 Kgf/cm$^2$ for 30 seconds, which can inhibit the deformation of the pores of the separator and maintain the ionic conductivity in the thickness direction of the high thermal-stability separator..

The decrease of air permeability (Gurley) of the present high thermal-stability separator is less than 35% after being compressed with a load of 88 Kgf/cm$^2$ for 30 seconds since the deformation of the pores of the high thermal-stability separator is inhibited, thereby the increase of the internal resistance or internal pressure of the battery caused by the stress generated during use can be avoided.

The term "decrease of compressed air permeability (Glurley, sec/100 c.c.)" used herein refers to the decrease of the air permeability of a separator due to the physical structures thereof destroyed by the compression with a load of 88 Kgf/cm$^2$ for 30 seconds. The decrease rate of compressed air permeability (%) was calculated by the following formula: $(1-G1/G2) \times 100\%$, wherein G1 is the air permeability of the high thermal-stability separator before being compressed, and G2 is the air permeability of the high thermal-stability separator after compression.

In an preferred embodiment of the present invention, the decrease rate of air permeability (Gurley) of the high thermal-stability separator is less than 30% after being compressed with a load of 88 Kgf/cm$^2$ for 30 seconds.

In an embodiment of the present invention, the high thermal-stability separator has a thermal rupture temperature more than 170°C which provides an excellent high temperature melt integrity and preventing the electrodes of the high thermal-stability separator from being contacting, thereby the safety of the battery can be enhanced.

In an embodiment of the present invention, the titanium oxide film and/or the titanium hydroxide film is deposited by chemical solution deposition by sequentially applying a precursor solution and a reactive solution on the porous film to make the reactive solution react with the precursor solution. The precursor solution is a 0.25wt% to 3wt% titanium alkoxide solution with a solvent of methanol, ethanol, isopropanol, or combinations thereof. The reactive solution is a 30wt% to 70wt% alcohol solution.

In an embodiment of the present invention, the titanium oxide and/or the titanium hydroxide film further comprises a tackifier, a stabilizer or a metal salt.

In an embodiment of the present invention, the titanium oxide and/or the titanium hydroxide film further comprises a tackifier to enhance the adherence between the titanium oxide and/or the titanium hydroxide film and the surface of the porous film and inner walls of the porous structures. Suitable tackifiers can be for example but not limited to poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

In an embodiment of the present invention, suitable tackifiers can be obtained from commercialized products, for example BM-950B (available from ZEON Corp. JP), PNVA GE191 series like GE191-103, GE191-104, GE191-107 or GE191-108 (available from Showa Denko K.K., JP), Soteras™ CCS-V Binder (available from Ashland Inc., USA) or CYJ-01 (available from Zhuhai Chenyu New Material Technology Co., Ltd, CN).

In an embodiment of the present invention, the titanium oxide and/or the titanium hydroxide film further comprises a stabilizer. A suitable stabilizer can be for example but not limited to hexamethyldisilazane (HMDS).

In an embodiment of the present invention, the titanium oxide and/or the titanium hydroxide film further comprises a metal salt to decrease the moisture content thereof. A suitable metal salt can be for example but not limited to sodium bromide, potassium iodide, magnesium chloride, strontium chloride, calcium chloride, strontium bromide, copper chloride, or combinations thereof.

In an embodiment of the present invention, the titanium oxide and/or the titanium hydroxide film further comprises additives such as flame retardants, antioxidants, surface modifiers or antistatic agents.

Another aspect of the present invention is to provide a high thermal-stability separator comprising a porous film which comprises a porous substrate and an inorganic layer, wherein the porous substrate and the inorganic layer have a plurality of porous structures communicated with each other; and a titanium oxide-silicon oxide film and/or a titanium hydroxide-silicon oxide film is deposited on the surface of the porous film and inner walls of the porous structures.

In an embodiment of the present invention, the porous substrate is a single-layered or multi-layered polyolefin, polyester or polyamide porous substrate. In an embodiment of the present invention, the porous substrate has a thickness of 5 μm to 30 μm, and preferably 7 μm~25 μm, and has a porosity of 30% to 50%.

In a preferred embodiment of the present invention, the inorganic layer is formed on one or both surfaces of the porous substrate, and the inorganic layer comprises 80wt% to 99wt% inorganic particles and 1wt% to 20wt% binder.

In an embodiment of the present invention, suitable inorganic particles for the inorganic layer are Mg(OH)2, BaSO4, BaTiO3, Pb(Zr,Ti)O3 (PZT), Pb1-xLaxZr1-y(Zr,TiyO3) (PLZT, wherein 0<x<1 and 0<y<1), Pb(Mg1/3Nb2/3)O3-PbTiO3 (PMN-PT), HfO2, SrTiO3, SnO2, CeO2, MgO, NiO, CaO, ZnO, ZrO2, SiO2, Y2O3, Al(OH)3, Al2O3, AlOOH, SiC, TiO2, or combinations thereof. In the high thermal-stability separator of the present invention, the binder suitable for the inorganic layer of the porous film is not particularly limited and can be the one suitably used in the separator field, such as binders having properties of high electrochemical stability, good wettability and chemical resistance to the electrolyte. In an embodiment of the present invention, the binder is for example but not limited to ethylene-vinyl acetate copolymer (EVA), poly(meth)acrylate, cross-linked (meth)acrylic resin, fluororubber, styrene-butadiene rubber (SBR), polyvinyl alcohol (PVA), polyvinyl butyral (PVB), polyvinylpyrrolidone (PVP), poly-n-vinyl acetamide, polyvinylidene fluoride (PVDF), polyurethane, or combinations thereof. The inorganic layer of the high thermal-stability separator of the present invention can be coated on the porous substrate by, for example but not limited to, bar coating, blade coating, dip coating, roll coating, spin coating, slot-die coating or the like, but not limited thereto.

Another aspect of the present invention is to provide a method for manufacturing a high thermal-stability separator, comprising the steps of providing a porous film comprising a porous substrate and an inorganic layer, wherein the inorganic layer comprises a plurality of inorganic particles and a binder, and the inorganic layer is formed on at least one surface of the porous substrate, and the porous substrate and the inorganic layer have a plurality of porous structures communicated with each other; and forming a titanium oxide film and/or a titanium hydroxide film on the surface and inner walls of the porous structures of the porous film. The titanium oxide and/or the titanium hydroxide film can be deposited on the surface of the porous film and inner walls of the porous structures by for example but not limited to chemical deposition, and other thin film forming methods such as atomic layer deposition or the like are also applicable.

According to an embodiment of the above-mentioned method, the step of forming a titanium oxide film and/or a titanium hydroxide film on the surface and the inner walls of the porous structures of the porous film comprises the steps of preparing a first chemical deposition solution set comprising a first precursor solution with a 0.25wt% to 3wt% titanium alkoxide solution, and a first reactive solution with a 30wt% to 70wt% alcohol solution; and sequentially applying the first precursor solution and the first reactive solution on the porous film to make the first reactive solution react with the first precursor solution to form a titanium oxide film and/or a titanium hydroxide film on the surface and the inner walls of the porous structures of the porous film.

According to an embodiment of the above-mentioned method, the titanium alkoxide is titanium methoxide, titanium ethoxide, titanium isopropoxide, titanium tert-butoxide or combinations thereof, and the solvent of the titanium alkoxide solution is methanol, ethanol, isopropanol, or combinations thereof. In a preferred embodiment of the present invention, the first precursor solution is a 0.25wt% to 2.5wt% titanium alkoxide solution.

According to an embodiment of the above-mentioned method, the alcohol of the first reactive solution is methanol, ethanol, isopropanol, ethoxyethanol, allyl alcohol, ethylene glycol, or combinations thereof. In a preferred embodiment of the present invention, the first reactive solution is a 40wt% to 60wt% alcohol solution. In a preferred embodiment of the present invention, the first reactive solution is a solution of methanol, ethanol, isopropanol, or combinations thereof.

According to an embodiment of the above-mentioned method, the first precursor solution further comprises a stabilizer with a using amount of 0.5wt% to 7wt%, and preferably 1wt% to 5wt%, and the stabilizer is hexamethyldisilazane (HMDS).

According to an embodiment of the above-mentioned method, the first reactive solution further comprises a tackifier with a using amount of 0.05wt% to 5wt%, and preferably 0.05wt% to 3wt%. A suitable tackifier can be for example but not limited to poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

According to an embodiment of the above-mentioned method, the first chemical deposition solution set is applied to the porous film by solution bath coating or spin coating.

According to another embodiment of the above-mentioned method, a second chemical deposition solution set is prepared after the first chemical deposition solution set is obtained, wherein the second chemical deposition solution set comprises a second precursor solution with a 0.25wt% to 3wt% titanium alkoxide solution and a second reactive solution with a 30wt% to 70wt% alcohol solution, and after sequentially applying the first precursor solution and the first reactive solution on the porous film, the second precursor solution and the second reactive solution are sequentially applied on the porous film.

According to an embodiment of the above-mentioned method, the type and concentration of the titanium alkoxide solution of the second precursor solution can be same as or different from that of the first precursor solution. The titanium alkoxide of the second precursor solution is titanium methoxide, titanium ethoxide, titanium isopropoxide, titanium tert-butoxide or combinations thereof, and the solvent of the second precursor solution is methanol, ethanol, isopropanol, or combinations thereof. In a preferred embodiment of the present invention, the second precursor solution is a 0.25wt% to 2.5wt% titanium alkoxide solution.

According to an embodiment of the above-mentioned method, the type and concentration of the alcohol solution of the second reactive solution can be same as or different from that of the first reactive solution. The alcohol solution of the second reactive solution is methanol, ethanol, isopropanol, ethoxyethanol, allyl alcohol, ethylene glycol, or combinations thereof. In a preferred embodiment of the present invention, the second reactive solution is a 40wt% to 60wt% alcohol solution. In a preferred embodiment of the present invention, the second reactive solution is a solution of methanol, ethanol, isopropanol, or combinations thereof.

According to an embodiment of the above-mentioned method, the second precursor solution further comprises a stabilizer with a using amount of 0.5wt% to 7wt%, and preferably 1wt% to 5wt%, and the stabilizer can be for example but not limited to hexamethyldisilazane (HMDS). The using amount of the stabilizer of the second precursor solution can be same as or different from that of the first precursor solution.

According to another preferred embodiment of the above-mentioned method, the second reactive solution further comprises a tackifier with a using amount of 0.05wt%~5wt%, and preferably 0.05wt% to 3wt%. A suitable tackifier can be for example but not limited to poly(meth)acrylate, poly-n-vinylacetamide, crosslinkable (meth)acrylic resin, acrylonitrile-acrylate copolymer, acrylonitrile-acrylamide-acrylate copolymer, or combinations thereof. The type and using amount of the tackifier of the second reactive solution can be same as or different from that of the first reactive solution.

According to another preferred embodiment of the above-mentioned method, the second reactive solution further comprises a metal salt with a using amount of 5wt% to 20wt%. A suitable metal salt can be for example but not limited to sodium bromide, potassium iodide, magnesium chloride, strontium chloride, calcium chloride, strontium bromide, copper chloride, or combinations thereof.

According to the above-mentioned method, the first or second reaction solution may further comprises additives such as antistatic agents, flame retardants, antioxidants, or surface modifiers as required.

According to the above-mentioned method, the second chemical deposition solution set is applied to the porous film by solution bath coating or spin coating.

Another aspect of the present invention is to provide a high thermal-stability separator, comprising: a porous film with a plurality of porous structures; and a titanium oxide-silicon oxide film and/or a titanium hydroxide-silicon oxide film formed on a surface and inner walls of the porous structures of the porous film.

Another aspect of the present invention is to provide a method for manufacturing a high thermal-stability separator, comprising the steps of providing a porous film with a plurality of porous structures and a titanium oxide-silicon oxide film and/or a titanium hydroxide-silicon oxide film on the surface of the porous film and inner walls of the porous structures by for example but not limited to chemical deposition, and other thin film forming methods such as atomic layer deposition or the like are also applicable.

According to an embodiment of the present invention, the titanium oxide-silicon oxide and/or the titanium hydroxide-silicon oxide film is deposited on the surface of the porous film and inner walls of the porous structures by chemical deposition, comprising the steps of providing a porous film with a plurality of porous structures and a titanium oxide film and/or a titanium hydroxide film on the surface of the porous film and inner walls of the porous structures; preparing a third chemical deposition solution set comprising a 1wt% to 10wt% alkoxysilane solution and a third reactive solution of 90wt% to 99.5wt% alcohol solution; and sequentially applying the alkoxysilane solution and the third reactive solution on the porous film to make the alkoxysilane solution react with the third reactive solution to form a titanium oxide-silicon oxide film and/or a titanium hydroxide-silicon oxide film on a surface and the inner walls of the porous structures of the porous film.

According to the above-mentioned method, the alkoxysilane solution is tetraethoxysilane (TEOS) with a solvent of methanol, ethanol, isopropanol or combinations thereof.

According to the above-mentioned method, the alkoxysilane solution further comprises a catalyst, and preferably comprises ammonia as the catalyst. In a preferred embodiment of the present invention, the using amount of the catalyst is 5 to 15 parts by weight per 100 parts by weight of solvent.

According to the above-mentioned method, the third chemical deposition solution set is applied to the porous film by solution bath coating or spin coating.

The present invention will be explained in further detail with reference to the examples. However, the present invention is not limited to these examples.

Examples

Preparation Example:

38 g of $Al_2O_3$ particles (CQ-030EN, available from Shandong Sinocera Functional Materials Co., Ltd., CN), 0.68 g of dispersant (BYK-154, available from BYK, Germany) and 52.9 g of deionized water were mixed and well-stirred, and then 3.4 g of polyacrylate and 0.13 g of polyether-modified silicone surfactant (BYK-349, available from BYK, Germany) were added thereafter to obtain an inorganic particles coating solution after being mixed and well-stirred.

The inorganic particles coating solution was coated on a PE porous substrate (porosity of 48%) and with a thickness of 9 μm and dried thereafter to form an inorganic layer with a thickness of 2 μm on one side of the PE porous substrate and generate a single-coating-layer porous film with a total thickness of 11 μm or form an inorganic layer with a thickness of 2 μm on both sides of the PE porous substrate and generate a double-coating-layer porous film with a total thickness of 13 μm.

Example 1: Preparation of a separator

196 g of anhydrous alcohol (99.5%) was mixed and well-stirred with 4 g of titanium isopropoxide (TTIP) to generate a first precursor solution. Then, 100 g of deionized water and 100 g of ethanol (95%) were mixed and well-stirred to prepare a first reactive solution.

198 g of anhydrous alcohol (99.5%) was mixed and well-stirred with 2 g of titanium isopropoxide (TTIP) at room temperature to generate a second precursor solution. Then, 100 g of deionized water and 100 g of ethanol (95%) were mixed and well-stirred to prepare a second reactive solution.

First, the double-coating-layer porous film obtained in the Preparation Example was dipped into the first precursor solution, and then the double-coating-layer porous film was removed out of the first precursor solution. The double-coating-layer porous film was then dipped into the first reactive solution after the residual first precursor solution on the surface of the double-coating-layer porous film was removed, and then the double-coating-layer porous film was removed out of the first reactive solution. The double-coating-layer porous film was dried at 80°C for 5 minutes after the residual first reactive solution on the surface of the double-coating-layer porous film was removed. Next, the dried double-coating-layer porous film was dipped into the second precursor solution, and then the double-coating-layer porous film was removed out of the second precursor solution. The double-coating-layer porous film was then dipped into the second reactive solution after the residual second precursor solution on the surface of the double-coating-layer porous film was removed, and then the double-coating-layer porous film was removed out of the second reactive solution. The double-coating-layer porous film was dried at 80°C for 5 minutes after the residual second reactive solution on the surface of the double-coating-layer porous film was removed, and a titanium oxide film and/or a titanium hydroxide film was formed on the surface of the porous film and the inner walls of the porous structures of the porous film to obtain a high thermal-stability separator.

The obtained high thermal-stability separator was tested by the following methods. The testing results were shown as the following Table 1.

Thickness of separators: The thickness was measured according to GB/T6672-2001. Thickness Analyzer (VL-50-B, available from Mitutoyo, Japan) was used to measure the thickness of the separators. The measurement was conducted by a flat probe with diameter of 3 mm with a measuring force of 0.01N.

Measurement of Gurley number: The Gurley number was measured according to ASTM D-726. The separator was cut into a sample of 1 inch $\times$ 1 inch and tested by an air permeability tester. The Gurley number was obtained by measuring the time for 100 C.C. of air to pass through the separator.

Thermal shrinkage test: The separator was cut into a sample of 10 cm $\times$ 10 cm, and the initial length in machine direction (MD) and the initial length in transverse direction (TD) were measured and marked as M0 and T0 on the center of the sample before testing. Then the marked sample was sandwiched between two A4 papers and heated in an oven at 150°C for 1 hr. After heating, the sample was removed out of the oven and put in the same environment as that of the thermal shrinkage measuring instrument for 30 minutes, and then the length in machine direction (MD) and the length in transverse direction (TD) were measured and marked as M1 and T1. The thermal shrinkage in machine direction (MD) rate (SMD) is calculated by the following formula: (M0-M1)/M0 $\times$ 100%

The thermal shrinkage in transverse direction (TD) rate (STD) is calculated by the following formula: (T0-T1)/T0 $\times$ 100%

Mechanical strength test: The mechanical strength was tested according to ASTM D882-09. The separator was cut along the machine direction (MD) and the transverse direction (TD) to obtain a sample with a width of 10 mm and a length $\geq$ 150 mm. The obtained sample was tested by utilizing a universal tensile machine to stretch at a rate of 500mm/min to obtain the maximum load during the broken of the sample. The mechanical strength in the machine direction (MD) and the mechanical strength in the transverse direction (TD) were respectively calculated by dividing the maximum load with the cross-sectional area of the separator (width of the sample $\times$ the thickness of the sub strate)

Puncture resistance: The puncture resistance was measured by a tensile tester (MSG-5, available from Kato Tech, Japan). The separators were punctured by a round head stainless steel needle with a diameter of 1 mm and a corner radius of 0.5 mm with at a speed of 100 $\pm$ 10 mm/min. The maximum force for puncturing the separator was recorded.

Absorptivity test: The separator for testing is cut into a sample of 80 mm $\times$ 10 mm, and the sample was vertically hung and soaked in a solvent (mixture of propylene carbonate (PC) and diethyl carbonate (DEC) in a weight ratio of 1:1) in a closed space, and the initial level height of the solvent was marked on the sample as a starting point. After 1 minute, the capillary absorbing height from the starting point of the sample was measured.

Measurement of contact angle : The contact angle of the separator sample was measured by the Surface Electro Optics (SEO) Phoenix-150 contact angle measuring instrument (available from Applied Microtech Inc., Taiwan), wherein propylene carbonate (PC, with a purity of 99%) was absorbed by an syringe with a needle diameter of 2 mm and installed on Phoenix-150, and the separator sample was fixed on the sample carrier of Phoenix-150, and then a volume droplet of the propylene carbonate (PC, with a purity of 99%) was injected onto the separator sample by the syringe, and the contact angle of the separator sample was determined after being measured with the optical system CCD and calculated by the computer software of Phoenix-150.

Crack test: The separator for testing is cut into a sample of 3 cm $\times$ 20 cm, and placed in an oven at 200°C for 1 hour. The sample was then taken out and visually observed to check if there was a crack appeared. Mark "X" means there is a crack appeared on the separator; Mark "$\Delta$" means it's unable to judge because of the shrinkage of the separator; Mark "O" means there is no crack appeared on the separator.

Melt integrity: The separator was cut into a separator sample with a length of 8 mm and a width of 4.5 mm, and then the separator sample was placed into a sample tank of thermomechanical analyzer (TMA 450, available from TA Instruments, U.S.A.) under the load of 0.01N and heated up to 200°C at a heating rate of 5°C/min. Under a fixed load of 0.01N, the separator sample reaches the heating limit with the increase of temperature, and the separator sample is determined as breaking when the deformation of the separator sample reaches the maximum value, and the temperature of breaking is defined as the thermal rupture temperature. The thermal rupture temperature of the separator sample was recorded.

Measurement of compression resistance: 50 pieces of separator of 4 cm × 4 cm were stacked as a sample with an initial thickness of T1. The sample was then placed into a jig and compressed with a load of 88 Kgf/cm$^2$ for 30 seconds. The thickness of the compressed sample was measured as T2. The compression rate and the compression resistance of the sample were calculated by the following formulas:

$$\text{Compression rate } (\%) = (T1-T2)/T1 \times 100.$$

$$\text{Compression resistance} = 100\% - \text{Compression rate } (\%).$$

Gurley number of the separator after compression: The Gurley number of the separator before being compressed was measured as G1 by the above-mentioned measurement of Gurley number. Then the separator was compressed by the above-mentioned measurement of compression resistance, and the Gurley number of the separator after being compressed was measured as G2 by the above-mentioned measurement of Gurley number.

$$\text{Decreasing rate of the Gurley number of the separator after compression } (\%) = (1-G1/G2) \times 100\%$$

Example 2: Preparation of a separator

198.4 g of anhydrous alcohol (99.5%) was mixed and well-stirred with 1.6 g of titanium isopropoxide (TTIP) at room temperature to generate a first precursor solution. Then, 98.4 g of deionized water, 98.4 g of ethanol (95%) and 3 g of poly-N-vinylacetamide (PNVA GE191-107, available from Showa Denko K.K., JP) were mixed and well-stirred at room temperature, and 0.13 g of acrylonitrile-acrylamide-acrylate copolymer (BM-950B) was added thereafter to generate a first reactive solution after being well-stirred at room temperature.

First, the double-coating-layer porous film obtained in the preparation example was dipped into the first precursor solution, and then the double-coating-layer porous film was removed out of the first precursor solution. The double-coating-layer porous film was then dipped into the first reactive solution after the residual first precursor solution on the surface of the double-coating-layer porous film was removed, and then the double-coating-layer porous film was removed out of the first reactive solution. The double-coating-layer porous film was dried at 80°C for 5 minutes after the residual first reactive solution on the surface of the double-coating-layer porous film was removed, and a titanium oxide film and/or a titanium hydroxide film was formed on the surface of the porous film and the inner walls of the porous structures the porous film to obtain a high thermal-stability separator.

The obtained high thermal-stability separator was tested by the methods described in Example 1. The testing results were shown as the following Table 1.

Example 3: Preparation of a separator

A first precursor solution, a first reactive solution and a second precursor solution were prepared based on the description of Example 1. Then, 98.4 g of deionized water, 98.4 g of ethanol (95%), 3 g of poly-N-vinylacetamide (PNVA GE191-107, available from Showa Denko K.K., JP) and 0.13 g of acrylonitrile-acrylamide-acrylate copolymer (BM-950B) were mixed and well-stirred at room temperature to generate a second reactive solution.

The double-coating-layer porous film obtained in the preparation example was sequentially dipped into the first precursor solution, the first reactive solution, the second precursor solution and the second reactive solution of this present Example 3 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 4: Preparation of a separator

A first precursor solution, a first reactive solution and a second precursor solution were prepared based on the description of Example 1. Then, 98.3 g of deionized water, 98.3 g of ethanol (95%) and 3 g of poly-N-vinylacetamide (PNVA GE191-107, available from Showa Denko K.K., JP) were mixed and well-stirred, and 0.417 g of Polyacrylic acid (PAA) (CYJ-01 Binder A, solid content of 48%, available from Zhuhai Chenyu New Material Technology Co., Ltd, CN) was added to mix and well-stirred at room temperature, and 0.042 g of epoxy (CYJ-01 Binder B, solid content of 100%, available from Zhuhai Chenyu New Material Technology Co., Ltd, CN) was added thereafter to generate a second reactive solution after being well-stirred at room temperature.

The double-coating-layer porous film obtained in the preparation example was sequentially dipped into the first precursor solution, the first reactive solution, the second precursor solution and the second reactive solution of this present Example 4 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 5: Preparation of a separator

196.4 g of anhydrous alcohol (99.5%) was mixed and well-stirred with 1.6 g of titanium isopropoxide (TTIP) and 2 g of hexamethyldisilazane (HMDS) at room temperature to generate a first precursor solution. Then, 98.4 g of deionized water, 98.4 g of ethanol (95%) and 3 g of poly-N-vinylacetamide (PNVA GE191-107) were added to mixed and well-stirred, and 0.13 g of acrylonitrile-acrylamide-acrylate copolymer (BM-950B) was added thereafter to generate a first reactive solution after being well-stirred at room temperature.

The double-coating-layer porous film obtained in the preparation example was sequentially dipped into the first precursor solution and the first reactive solution of this present Example 5 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 6: Preparation of a separator

194 g of anhydrous alcohol (99.5%) was mixed and well-stirred with 4 g of titanium isopropoxide (TTIP) and 2 g of hexamethyldisilazane (HMDS) at room temperature to generate a first precursor solution. Then, 100 g of deionized water and 100 g of ethanol (95%) were mixed at room temperature to generate a first reactive solution after being well-stirred.

196 g of anhydrous alcohol (99.5%) was mixed and well-stirred with 2 g of titanium isopropoxide (TTIP) and 2 g of hexamethyldisilazane (HMDS) at room temperature to generate a second precursor solution. Then, 98.4 g of deionized water, 98.4 g of ethanol (95%) and 3 g of poly-N-vinylacetamide (PNVA GE191-107) were mixed and well-stirred at room temperature, and 0.13 g of acrylonitrile-acrylamide-acrylate copolymer (BM-950B) was added thereafter to generate a second reactive solution after being well-stirred at room temperature.

The double-coating-layer porous film obtained in the preparation example was sequentially dipped into the first precursor solution, the first reactive solution, the second precursor solution and the second reactive solution of this present Example 6 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 7: Preparation of a separator

189 g of anhydrous alcohol (99.5%) was mixed and well-stirred with 1 g of titanium isopropoxide (TTIP) and 10 g of hexamethyldisilazane (HMDS) at room temperature to generate a first precursor solution. Then, 100 g of deionized water and 100 g of ethanol (95%) were mixed at room temperature to generate a first reactive solution after being well-stirred.

189 g of anhydrous alcohol (99.5%) was mixed and well-stirred with 1 g of titanium isopropoxide (TTIP) and 10 g of hexamethyldisilazane (HMDS) at room temperature to generate a second precursor solution. Then, 98.4 g of deionized water, 98.4 g of ethanol (95%) and 3 g of poly-N-vinylacetamide (PNVA GE191-107) were added and well-stirred at room temperature, and 0.13 g of acrylonitrile-acrylamide-acrylate copolymer (BM-950B) was added thereafter to generate a second reactive solution after being well-stirred at room temperature.

The double-coating-layer porous film obtained in the preparation example was sequentially dipped into the first precursor solution, the first reactive solution, the second precursor solution and the second reactive solution of this present Example 7 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 8: Preparation of a separator

A first precursor solution, a first reactive solution and a second precursor solution were prepared based on the description of Example 1. Then, 90 g of deionized water, 90 g of ethanol (95%) and 20 g of SrCl$_2$·6H$_2$O (available from Thermo Scientific Co. LLC, USA) were mixed and well-stirred at room temperature to generate a second reactive solution

The double-coating-layer porous film obtained in the preparation example was sequentially dipped into the first precursor solution, the first reactive solution, the second precursor solution and the second reactive solution of this present Example 8 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 9: Preparation of a separator

A first precursor solution, a first reactive solution, a second precursor solution and a second reactive solution were prepared based on the description of Example 3.

Then, 16.25 g of TEOS (available from Thermo Scientific Co. LLC, USA) was added to 500g of ethanol (95%) and mixed and well-stirred at 50°C, and 55 g of ammonium was added and well-stirred at 50°C for 15 minutes to generate an alkoxysilane solution. 200g of ethanol (95%) was used as a third reactive solution.

First, the double-coating-layer porous film obtained in the preparation example was sequentially dipped into the first precursor solution, the first reactive solution, the second precursor solution and the second reactive solution of this present Example 9 to form a titanium oxide film and/or a titanium hydroxide film on the surface of the porous film and the inner walls of the porous structures of the porous film. Next, the double-coating-layer porous film was further sequentially dipped into the alkoxysilane solution and the third reactive solution to form a titanium oxide-silicon oxide film and/or a titanium hydroxide-silicon oxide film on the surface of the porous film and the inner walls of the porous structures of the porous film to obtain a high thermal-stability separator.

The obtained high thermal-stability separator was tested by the methods described in Example 1. The testing results were shown as the following Table 1.

Example 10: Preparation of a separator

A first precursor solution, a first reactive solution, a second precursor solution and a second reactive solution were prepared based on the description of Example 3.

The single-coating-layer porous film obtained in the preparation example was sequentially dipped into the first precursor solution, the first reactive solution, the second precursor solution and the second reactive solution of this present Example 10 to form a titanium oxide film and/or a titanium hydroxide film on the surface of the porous film and the inner walls of the porous structures of the porous film to obtain a high thermal-stability separator.

The obtained high thermal-stability separator was tested by the methods described in Example 1. The testing results were shown as the following Table 1.

Comparative Examples 1 and 2

Comparative Examples 1 and 2 are double-coating-layer porous film and single-coating-layer porous film obtained from the preparation example. The porous films of Comparative Examples 1 and 2 were not treated with the precursor solution and the reactive solution, and were tested by the testing methods described in Example 1. The test results are listed in Table 1.

Table 1. Testing results of Examples 1~10 and Comparative Examples 1-2

| Table 1 | | Comparative Example 1 | Comparative Example 2 | Example 1 | Example 2 | Example 3 | Example 4 |
|---|---|---|---|---|---|---|---|
| Total thickness of the separator ($\mu$m) | | 13 | 11 | 13 | 13 | 13 | 13 |
| Thickness of the porous substrate ($\mu$m) | | 9 | 9 | 9 | 9 | 9 | 9 |
| Thickness Of The Inorganic Layer ($\mu$m) | | 4 | 2 | 4 | 4 | 4 | 4 |
| Gurley Number (sec/100c.c.) | | 112 | 99 | 122 | 114 | 138 | 130 |
| Thermal Shrinkage (150C@1hr) | MD | 1.5 | >50 | 1.5 | 1 | 1.0 | 0.75 |
| | TD | 1.0 | >50 | 1.0 | 0.5 | 1.0 | 0 |
| Mechanical Strength (Kgf/cm$^2$) | MD | 1620 | 1589 | 1601 | 1600 | 1589 | 1555 |
| | TD | 1611 | 1499 | 1588 | 1567 | 1383 | 1546 |
| Puncture Resistance (gf) | | 455 | 430 | 445 | 445 | 463 | 431 |
| Capillary Absorbing Height (mm) | | 5.5 | 2.5 | 7.5 | 8.5 | 9.0 | 9.5 |
| Contact Angle (°) | | 24.7 | 23.8 | 23.4 | 21.6 | 19.7 | 21.1 |
| Crack Test | | X | Δ | ○ | ○ | ○ | ○ |
| Thermal rupture Temperature (°) | | 154.1 | 152.5 | 175.7 | 178.8 | >200 | 186.2 |
| Compression Resistance (%) | | 89.2 | 82.8 | 91.7 | 90.2 | 92.1 | 93.2 |
| Gurley Number After compression (sec/100c.c.) | | 191 | 191 | 172 | 174 | 168 | 172 |
| Decreasing Rate of Gurley Number After compression (%) | | 41.4 | 48.2 | 29.1 | 34.5 | 17.9 | 24.4 |
| Table 1 (cont'd) | | Example 5 | Example 6 | Example 7 | Example 8 | Example 9 | Example 10 |
| Total thickness of the separator ($\mu$m) | | 13 | 13 | 13 | 13 | 13 | 11 |
| Thickness of the porous substrate ($\mu$m) | | 9 | 9 | 9 | 9 | 9 | 9 |
| Thickness of The Inorganic Layer ($\mu$m) | | 4 | 4 | 4 | 4 | 4 | 2 |
| Gurley Number (sec/100c.c.) | | 108.8 | 135 | 110 | 292 | 188 | 120 |
| Thermal Shrinkage (150C@1hr) | MD | 0.75 | 1.0 | 0.75 | 0.75 | 0.5 | 4.0 |
| | TD | 0.5 | 0 | 0.5 | 0 | 0 | 4.0 |
| Mechanical Strength (Kgf/cm$^2$) | MD | 1587 | 1622 | 1587 | 1555 | 1539 | 1577 |
| | TD | 1570 | 1601 | 1577 | 1498 | 1519 | 1560 |
| Puncture Resistance (gf) | | 443 | 459 | 439 | 439 | 433 | 443 |
| Capillary Absorbing Height (mm) | | 8.8 | 9.2 | 9.0 | 8.5 | 10.0 | 4.0 |
| Contact Angle (°) | | 22.4 | 19.7 | 21.3 | 24.0 | 18.2 | 20.2 |
| Crack Test | | ○ | ○ | ○ | ○ | ○ | ○ |

(continued)

| Table 1 (cont'd) | Example 5 | Example 6 | Example 7 | Example 8 | Example 9 | Example 10 |
|---|---|---|---|---|---|---|
| Thermal rupture Temperature (°) | 177.8 | >200 | 175.2 | >200 | >200 | 188.4 |
| Compression Resistance (%) | 91.0 | 94.3 | 92.0 | 90.4 | 94.9 | 93.5 |
| Gurley Number After compression (sec/100c.c.) | 159 | 172 | 174 | 361 | 232 | 147 |
| Decreasing Rate of Gurley Number After compression (%) | 31.6 | 18.8 | 17.9 | 19.1 | 19.0 | 18.4 |

As the test results shown in Table 1, comparing to the separators of Comparative Examples 1 and 2 without a titanium oxide film and/or a titanium hydroxide film, each of the high thermal-stability separators of Example 1 to 10 has an enhanced compression retention and an excellent high temperature melt integrity, and maintain a satisfied air permeability (Gurley) after compression since each of the separators has a compression resistance more than 90%, a decreasing rate of Gurley number after compression less than 34.5%, a thermal rupture temperature more than 170°C, a low thermal shrinkage and no crack appeared during the crack test. Moreover, the high thermal-stability separators of Example 1 to 10 can enhance the electrical performance of the battery application since each of them has a better wettability to electrolyte.

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

**Claims**

1. A high thermal-stability separator, comprising:

   a porous film comprising a porous substrate and an inorganic layer, wherein the inorganic layer comprises a plurality of inorganic particles and a binder and is formed on at least one surface of the porous substrate, and the porous substrate and the inorganic layer have a plurality of porous structures communicated with each other; and
   a titanium oxide film and/or a titanium hydroxide film deposited on a surface of the porous film and inner walls of the porous structures.

2. The high thermal-stability separator as claimed in Claim 1, wherein the titanium oxide film and/or the titanium hydroxide film is deposited by chemical solution deposition.

3. The high thermal-stability separator as claimed in Claim 2, wherein the titanium oxide film and/or the titanium hydroxide film is deposited by first applying a precursor solution on the porous film and applying a reactive solution thereafter to react with the precursor solution.

4. The high thermal-stability separator as claimed in Claim 3, wherein the precursor solution is a 0.25wt% to 3wt% titanium alkoxide solution.

5. The high thermal-stability separator as claimed in Claim 4, wherein the titanium alkoxide is titanium methoxide, titanium ethoxide, titanium isopropoxide, titanium tert-butoxide or combinations thereof, and a solvent of the titanium alkoxide solution is methanol, ethanol, isopropanol, or combinations thereof.

6. The high thermal-stability separator as claimed in Claim 3, wherein the reactive solution is a 30wt% to 70wt% alcohol solution.

7. The high thermal-stability separator as claimed in Claim 1, wherein the titanium oxide and/or the titanium hydroxide film further comprises a tackifier, wherein the tackifier is poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

8. The high thermal-stability separator as claimed in Claim 1, wherein the titanium oxide and/or the titanium hydroxide film further comprises a stabilizer, wherein the stabilizer is hexamethyldisilazane (HMDS).

9. The high thermal-stability separator as claimed in Claim 1, wherein the titanium oxide and/or the titanium hydroxide film further comprises a metal salt, wherein the metal salt is sodium bromide, potassium iodide, magnesium chloride, strontium chloride, calcium chloride, strontium bromide, copper chloride, or combinations thereof.

10. A method for manufacturing a high thermal-stability separator, comprising the steps of

providing a porous film comprising a porous substrate and an inorganic layer, wherein the inorganic layer comprises a plurality of inorganic particles and a binder, and the inorganic layer is formed on at least one surface of the porous substrate, and the porous substrate and the inorganic layer have a plurality of porous structures interconnected with each other; and
forming a titanium oxide film and/or a titanium hydroxide film on a surface of the porous film and inner walls of the porous structures.

11. The method as claimed in Claim 10, wherein the step of forming a titanium oxide film and/or a titanium hydroxide film on the surface of the porous film and the inner walls of the porous structures comprises the steps of:

preparing a first chemical deposition solution set comprising a first precursor solution with a 0.25wt% to 3wt% titanium alkoxide solution, and a first reactive solution with a 30wt% to 70wt% alcohol solution; and
sequentially applying the first precursor solution and the first reactive solution on the porous film to make the first reactive solution react with the first precursor solution to form a titanium oxide film and/or a titanium hydroxide film on the surface and the inner walls of the porous structures of the porous film.

12. The method as claimed in Claim 11, wherein the titanium alkoxide of the first precursor solution is titanium methoxide, titanium ethoxide, titanium isopropoxide, titanium tert-butoxide, or combinations thereof, and the solvent of the first precursor solution is methanol, ethanol, isopropanol, or combinations thereof.

13. The method as claimed in Claim 12, wherein the first precursor solution is a 0.25wt% to 2.5wt% titanium alkoxide solution.

14. The method as claimed in Claim 11, wherein the alcohol of the first reactive solution is methanol, ethanol, isopropanol, ethoxyethanol, allyl alcohol, ethylene glycol or combinations thereof.

15. The method as claimed in Claim 11, wherein the first reactive solution is a 40wt% to 60wt% alcohol solution.

16. The method as claimed in Claim 11, wherein the first precursor solution further comprises a stabilizer with a using amount of 0.5wt% to 7wt%, and the stabilizer is hexamethyldisilazane (HMDS).

17. The method as claimed in Claim 11, wherein the first reactive solution further comprises a tackifier with a using amount of 0.05wt% to 5wt%, wherein the tackifier is poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

18. The method as claimed in Claim 11, further comprising steps of:

preparing a second chemical deposition solution set comprising a second precursor solution with a 0.25wt% to 3wt% titanium alkoxide solution, and a second reactive solution with a 30wt% to 70wt% alcohol solution after the step of preparing the first chemical deposition solution set, and
sequentially applying the second precursor solution and the second reactive solution on the porous film after the step of sequentially applying the first precursor solution and the first reactive solution on the porous film.

19. The method according to claim 18, wherein the titanium alkoxide of the second precursor solution is titanium methoxide, titanium ethoxide, titanium isopropoxide, titanium tert-butoxide, or combinations thereof, and the solvent of the second precursor solution is methanol, ethanol, isopropanol, or combinations thereof, and the alcohol of the second reactive solution is methanol, ethanol, isopropanol, ethoxyethanol, allyl alcohol, ethylene glycol or combinations thereof.

20. The method as claimed in Claim 19, wherein the second precursor solution is a 0.25wt% to 2.5wt% titanium alkoxide solution.

21. The method as claimed in Claim 18, wherein the second precursor solution further comprises a stabilizer with a using amount of 0.5wt% to 7wt%, and the stabilizer is hexamethyldisilazane (HMDS).

22. The method as claimed in Claim 18, wherein the second reactive solution further comprises a tackifier with a using amount of 0.05wt% to 5wt%, wherein the tackifier is poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

23. The method as claimed in Claim 18, wherein the second reactive solution further comprises a metal salt with a using amount of 5wt% to 20wt%, wherein the metal salt is sodium bromide, potassium iodide, magnesium chloride, strontium chloride, calcium chloride, strontium bromide, copper chloride, or combinations thereof.

Europäisches
Patentamt

European
Patent Office

Office européen
des brevets

## EUROPEAN SEARCH REPORT

Application Number

EP 23 20 8045

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/078791 A1 (HENNIGE VOLKER [DE] ET AL) 13 April 2006 (2006-04-13) | 1-15, 17-20, 22,23 | INV. H01M10/42 H01M50/403 |
| Y | * page 2, paragraph 0019 - page 11, paragraph 0139; figures 1A-3B; tables 1,2 * | 8,16,21 | H01M50/434 H01M50/443 H01M50/446 H01M50/451 |
| X | WO 2015/105223 A1 (UNIV SUNGKYUNKWAN RES & BUS [KR]) 16 July 2015 (2015-07-16) | 1-15, 18-20,23 | H01M50/457 H01M50/489 |
| Y | * page 2, paragraph 9 - page 15, paragraph | 8,16,21 | |
| A | 95; figures 1-3C; tables 1-3 * | 17,22 | ADD. H01M50/449 |
| X | US 2017/025658 A1 (SHI LIE [US] ET AL) 26 January 2017 (2017-01-26) | 1-10,23 | H01M10/052 |
| Y | * page 8, paragraph 0082 - page 26, | 8,16,21 | |
| A | paragraph 0151; figures 1-42 * | 11-15, 17-20 | |
| Y | US 10 722 866 B2 (FUJI XEROX CO LTD [JP]) 28 July 2020 (2020-07-28) * column 2, line 13 - column 15, line 63 * | 8,16,21 | |

TECHNICAL FIELDS SEARCHED (IPC)

H01M

The present search report has been drawn up for all claims

| Place of search | Date of completion of the search | Examiner |
|---|---|---|
| Munich | 12 April 2024 | Polisski, Sergej |

EPO FORM 1503 03.82 (P04C01)

## ANNEX TO THE EUROPEAN SEARCH REPORT
## ON EUROPEAN PATENT APPLICATION NO.

EP 23 20 8045

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2024

| Patent document cited in search report | | Publication date | Patent family member(s) | | Publication date |
|---|---|---|---|---|---|
| US 2006078791 | A1 | 13-04-2006 | AU 2003283363 | A1 | 18-06-2004 |
| | | | CN 1717820 | A | 04-01-2006 |
| | | | DE 10255121 | A1 | 03-06-2004 |
| | | | EP 1565950 | A2 | 24-08-2005 |
| | | | JP 4594098 | B2 | 08-12-2010 |
| | | | JP 2006507635 | A | 02-03-2006 |
| | | | KR 20050086877 | A | 30-08-2005 |
| | | | KR 20120064716 | A | 19-06-2012 |
| | | | TW 200418217 | A | 16-09-2004 |
| | | | US 2006078791 | A1 | 13-04-2006 |
| | | | US 2009269489 | A1 | 29-10-2009 |
| | | | WO 2004049471 | A2 | 10-06-2004 |
| WO 2015105223 | A1 | 16-07-2015 | KR 20150084337 | A | 22-07-2015 |
| | | | WO 2015105223 | A1 | 16-07-2015 |
| US 2017025658 | A1 | 26-01-2017 | CA 2992141 | A1 | 26-01-2017 |
| | | | CN 108140784 | A | 08-06-2018 |
| | | | CN 115663401 | A | 31-01-2023 |
| | | | EP 3350853 | A1 | 25-07-2018 |
| | | | JP 2018529179 | A | 04-10-2018 |
| | | | JP 2021108284 | A | 29-07-2021 |
| | | | JP 2023062017 | A | 02-05-2023 |
| | | | KR 20180024022 | A | 07-03-2018 |
| | | | US 2017025658 | A1 | 26-01-2017 |
| | | | US 2021367308 | A1 | 25-11-2021 |
| | | | WO 2017015535 | A1 | 26-01-2017 |
| US 10722866 | B2 | 28-07-2020 | JP 7167445 | B2 | 09-11-2022 |
| | | | JP 2019126785 | A | 01-08-2019 |
| | | | US 2019224648 | A1 | 25-07-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 112101053
- TW 112126740